# EUROPÄISCHE PATENTSCHRIFT

(11) **EP 2 041 414 B1**
(45) Veröffentlichungstag und Bekanntmachung des Hinweises auf die Patenterteilung: **16.06.2010**
(21) Anmeldenummer: 07764965.5
(22) Anmeldetag: 29.06.2007
(51) Int. Cl.: F02D 13/02, F02D 21/08, F02M 25/07, F02D 23/00, F02B 47/08, F02B 3/04

(54) **VERFAHREN ZUM BETRIEB EINES OTTO-MOTORS**
METHOD FOR OPERATING A SPARK-IGNITION ENGINE
PROCEDE DE FONCTIONNEMENT D'UN MOTEUR A ALLUMAGE PAR ETINCELLES

(30) Priorität: 14.07.2006 DE 102006032719
(43) Veröffentlichungstag der Anmeldung: 01.04.2009
(73) Patentinhaber: Daimler AG, 70327 Stuttgart (DE)
(72) Erfinder: KOCH, Thomas, 71034 Böblingen (DE)
(74) Vertreter: JENSEN & SON
(86) Internationale Anmeldenummer: PCT/EP2007/005804
(87) Internationale Veröffentlichungsnummer: WO 2008/006476

(56) Entgegenhaltungen:
- DE-C1- 4 216 759
- GB-A- 2 358 435
- JP-A- 10 318 005

## Beschreibung

Die Erfindung betrifft ein Verfahren zum Betrieb eines Otto-Motors insbesondere in einem Nutzfahrzeug mit den Merkmalen nach dem Oberbegriff des Anspruchs 1.

In Nutzfahrzeugen werden üblicherweise Dieselmotoren eingesetzt. Bauartbedingt sind hier hohe Verdichtungsverhältnisse möglich, die einen vergleichsweise hohen thermodynamischen Wirkungsgrad und in der Folge eine gute Wirtschaftlichkeit nach sich ziehen. Das Einspritzsystem des Dieselmotors und andere Komponenten sind allerdings kostspielig. Nachteilig ist auch die hohe Schadstoffemission, insbesondere die Russemission im Volllastbetrieb.

Aus der DE 42 16 759 Cl ist ein Dieselmotor mit Abgasrückführung bekannt, dessen Einlassorgane entsprechend dem Miller-Verfahren frühzeitig verschlossen werden. Dadurch soll lediglich einer Temperaturerhöhung der Ladung des Brennraums durch Abgasrückführung zum Reduzieren von Stickoxiden entgegen gewirkt werden.

Fremdgezündete Otto-Motoren können bei entsprechender Bauweise mit einem Luftverhältnis von λ = 1 oder größer, also im Magerbetrieb eingesetzt werden. Die entstehenden Abgase sind im Vergleich zum Dieselmotor nahezu russfrei. Die Wirtschaftlichkeit von Otto-Motoren ist jedoch durch eine Vielzahl von thermodynamischen Randbedingungen begrenzt. Im Hinblick auf die Neigung von Ottokraftstoff zur verfrühten Selbstentzündung (Klopfen) darf das geometrische Verdichtungsverhältnis ein bestimmtes Grenzmaß nicht überschreiten und liegt deutlich unter dem eines Dieselmotors. Der thermodynamische Wirkungsgrad ist dementsprechend eingeschränkt.

Zur Verbesserung des Wirkungsgrades ist es bekannt, einen Otto-Motor nach dem so genannten Miller-Verfahren zu betreiben. Hierbei erhält der Otto-Motor ein gegenüber dem Normalbetrieb erhöhtes Verdichtungsverhältnis. Um die daraus resultierende Klopfneigung zu kompensieren, werden die Einlassventile der Zylinder sehr früh oder sehr spät, also deutlich vor oder deutlich nach dem zugeordneten unteren Totpunkt UT = 540° Kurbelwinkel geschlossen. Die Ansaugung von frischer Verbrennungsluft wird entweder frühzeitig unterbrochen, oder aber ein Teil der angesaugten Luftmenge wird wieder zurück in den Ansaugtrakt geschoben. Hierdurch wir der jeweilige Zylinder nur unvollständig gefüllt. Trotz der erhöhten geometrischen Kompression stellt sich ein verringertes Temperaturniveau ein, wodurch das Auftreten von Klopfen vermieden werden kann.

Eine Weiterbildung des vorgenannten Verfahrens ist beispielsweise aus der DE 199 50 677 A1 bekannt. Im Teillastbereich ist eine möglichst hohe Verdichtung vorgesehen. Durch Steuerzeitverstellung des Einlass- und Auslassventils kann im Volllastbereich das erhöhte Verdichtungsverhältnis zurückgenommen werden. Ergänzend kann eine Aufladung vorgesehen sein. Für den Niedrig- und Teillastbereich wird optional ein Magerbetrieb vorgeschlagen.

Im gedrosselten Zustand, also im unteren Lastbereich kann auch eine Abgasrückführung vorgenommen werden.

Ein derartig betriebener Otto-Motor ist insbesondere für den Volllastbetrieb nur eingeschränkt geeignet. Die Kolben und abgasführenden Teile im Bereich der Auslassventile unterliegen hohen thermischen Belastungen. Zur Reduzierung der thermischen Belastung wird im Volllastbetrieb üblicherweise eine Anfettung des Kraftstoff/Luftgemisches vorgenommen, was zu Verbrauchsnachteilen und erhöhter Schadstoffemission führt.

Eine Weiterbildung des vorgenannten Verfahrens ist auch aus der gattungsbildenden JP 10-318005 A bekannt. Der aufgeladene Gas-Stationär-Motor wird als Otto-Motor nach dem Miller-Verfahren betrieben. Der Motor kann mager betrieben werden und weist eine Abgasrückführung auf. Allerdings wird das Potential dieses Motors nicht voll ausgeschöpft, da ein niedriges geometrisches Verdichtungsverhältnis von 10 nicht verändert wird.

Insbesondere im Hinblick auf die letztgenannten Nachteile sind derartig betriebene Otto-Motoren für Nutzfahrzeuge nur bedingt geeignet. Nutzfahrzeuge weisen im Vergleich zu Personenkraftwagen einen erhöhten Betriebsanteil unter Volllast auf. Um dennoch eine hinreichende Langlebigkeit des Motors zu erreichen, sind konstruktive Maßnahmen und/oder Betriebsparameter vorzusehen, die die thermisch-mechanischen Belastungen der einzelnen Motorkomponenten begrenzen. Die übliche thermische Begrenzung durch Anfettung des Kraftstoff/Luftgemisches bei Volllast führt jedoch gerade bei Nutzfahrzeugen mit einem hohen Volllastanteil zu unzulänglicher Wirtschaftlichkeit. Das Potential des geringen Schadstoffausstoßes wird nicht ausgenutzt.

Der Erfindung liegt die Aufgabe zugrunde, ein Verfahren zum Betrieb eines Otto-Motors mit verbesserter Wirtschaftlichkeit anzugeben.

Diese Aufgabe wird durch ein Verfahren mit den Merkmalen des Anspruchs 1 gelöst.

Es wird ein Verfahren zum Betrieb eines Otto-Motors insbesondere in einem Nutzfahrzeug vorgeschlagen, bei dem mindestens ein Einlassventil des Otto-Motors sehr früh oder sehr spät geschlossen wird, und bei dem ein dem Otto-Motor zugeführter Verbrennungsluftstrom mit einem Lader verdichtet wird. Das sehr frühe oder sehr späte Schließen des mindestens einen Einlassventils in Verbindung mit einem gegenüber dem aufgeladenen Normalbetrieb erhöhten geometrischen Verdichtungsverhältnis erzeugt eine Verringerung des Temperaturniveaus bei erhöhtem thermodynamischem Wirkungsgrad. Die durch die Schließzeiten der Einlassventile verringerte Zylinderfüllung wird durch die Verdichtung des Verbrennungsluftstromes mittels des Laders zumindest näherungsweise kompensiert, so dass ein hinreichendes Leistungsniveau zur Verfügung steht. Als Lader kann ein ein- oder mehrstufiger Lader in Form eines Turboladers, Kompressors oder dgl., ggf. in Kombination mit einem elektrischen Booster oder dgl., zweckmäßig sein. Als weitere Maßnahme zur Temperaturverringerung wird dem Verbrennungsluftstrom zumindest bei Volllast ein Teilstrom von abgeführtem Abgas als Abgasrückführung zugeführt.

Die Summe der vorgenannten Maßnahmen ermöglicht die Ausschöpfung des Potentials bei Volllast und hoher Teillast: Das Temperaturniveau ist so weit gesenkt, dass auf eine Anfettung des Kraftstoff/Luftgemisches verzichtet werden kann. Nach der Erfindung kann der Otto-Motor zumindest bei Volllast und insbesondere auch bei Teillast mit einem Luftverhältnis von größer gleich etwa 1 und vorteilhaft mit einem Luftverhältnis in einem Bereich von einschließlich etwa 1 bis einschließlich etwa 2 betrieben werden. Unter Vermeidung von thermisch-mechanischer Überlastung ergibt sich bei Volllast und bei Teillast ein geringer spezifischer Kraftstoffverbrauch bei nahezu russfreiem Abgas. Zur weiteren Abgasnachbehandlung kann auch ein Katalysator beliebiger Bauart nachgeschaltet werden.

In vorteilhafter Weiterbildung wird die Abgasrückführung, zumindest bei Volllast, insbesondere aber auch bei Teillast mit einer Rate im Bereich von einschließlich 10% bis einschließlich 35%, insbesondere von einschließlich 15% bis einschließlich 24% und bevorzugt von etwa 18% des gesamten, dem Motor zugeführten Gasstromes vorgenommen. Kühlung, spezifischer Kraftstoffverbrauch und Abgasemission sind optimiert.

In einer zweckmäßigen Ausführung wird das mindestens eine Einlassventil des jeweiligen Zylinders zeitlich vor dem zum Ansaugtakt gehörenden unteren Totpunkt (540° Kurbelwinkel) geschlossen. Bevorzugt erfolgt das Schließen bei einem Kurbelwinkel in einem Bereich von einschließlich 80° bis einschließlich 60° und insbesondere bei etwa 70° vor dem zugehörigen Totpunkt. Dies stellt eine optimale Kombination aus darstellbarer Leistung und geringstem Verbrauch dar.

Zur Optimierung des Wirkungsgrades bei verschiedenen Lastbereichen wird vorteilhaft abhängig vom Betriebspunkt des Otto-Motors ein Zeitpunkt für das Schließen des mindestens einen Einlassventils variabel eingestellt.

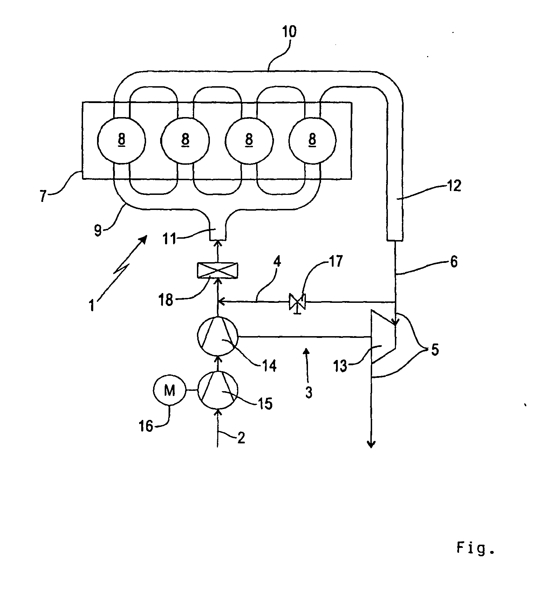

Ein Ausführungsbeispiel des erfindungsgemäß betriebenen Otto-Motors ist in der Zeichnung dargestellt. Die einzige Figur zeigt einen schematisch angedeuteten Otto-Motor 1, in dessen Zylinderblock 7 beispielhaft vier angedeutete Zylinder 8 mit darin auf- und abbeweglich geführten Kolben angeordnet sind.

Eine angedeutete Ansaugleitung 11 führt den Zylindern 8 über einen Ansaugkrümmer 9 einen Verbrennungsluftstrom 2 mit einem Anteil von rückgeführtem Abgas zu. Zur Bildung eines in den Zylindern 8 zu verbrennenden Kraftstoff/Luftgemisches kann Kraftstoff wahlweise in die Ansaugleitung 11 (Saugrohreinspritzung) oder direkt in die Zylinder 8 (Direkteinspritzung) eingespritzt werden. Die Steuerung der Zufuhr des Verbrennungsluftstromes 2 in die Zylinder 8 erfolgt über nicht dargestellte Einlassventile, wobei jeder Zylinder 8 jeweils mindestens ein Einlassventil aufweist.

Die bei der Verbrennung des Kraftstoff/Luftgemisches in den Zylindern 8 entstehenden Abgase werden als Abgasstrom 6 aus den Zylindern 8 über einen Abgaskrümmer 10 bzw. eine Abgasleitung 12 abgeführt. Die Auslasssteuerung des Abgasstromes 6 aus den Zylindern 8 erfolgt über nicht dargestellte Auslassventile, wobei jedem einzelnen Zylinder 8 jeweils mindestens ein Auslassventil zugeordnet ist.

Die Abgasleitung 12 ist mit der Ansaugleitung 11 über eine Abgasrückführungsleitung strömungsleitend verbindbar. Hierzu ist ein Regelventil 17 vorgesehen, mit dem die Zufuhr eines Teilstromes 4 des Abgasstromes 6 als Abgasrückführung zum Verbrennungsluftstrom 2 bemessen werden kann.

Ein nach Abzweigung des Teilstromes 4 verbleibender Reststrom 5 des Abgasstromes 6 wird durch eine Turbine 13 eines Laders 3 geführt, wodurch ein Verdichter 14 des Laders 3 angetrieben wird. Der Verdichter 14 verdichtet den Verbrennungsluftstrom 2, bevor dieser in die Zylinder 8 eingeleitet wird. Optional kann stromauf des Verdichters 14 ein Vorverdichter 15 als Teil des Laders 3 angeordnet sein, der durch einen separaten Motor 16 angetrieben wird. Als so genannter Booster kann er im geringen Lastbereich zu einer Ladungserhöhung beitragen. Der gezeigte Lader 3 ist beispielhaft ein Abgasturbolader. Es können auch beliebige andere Bauformen eines ein- oder mehrstufigen Laders 3 eingesetzt werden.

Die Abgasrückführungsleitung mit dem Regelventil 17 zweigt stromauf der Turbine 13 von der Abgasleitung 2 ab, kann aber auch stromab der Turbine 13 abgezweigt sein. Sie ist stromab des Verdichters 14 in die Ansaugleitung 11 geführt. Demnach verdichten der Verdichter 14 und der Vorverdichter 15 allein den zugeführten Verbrennungsluftstrom 2. Es kann auch zweckmäßig sein, die Abgasrückführungsleitung stromauf des Verdichters 14 und/oder des Vorverdichters 15 in die Ansaugleitung 11 münden zu lassen, wobei der entstehende Gesamtgasstrom durch den Verdichter 14 und/oder den Vorverdichter 15 verdichtet wird.

Stromab der Stelle, an der die Abgasrückführungsleitung in die Ansaugleitung 11 mündet, ist ein Kühler 18 angeordnet, der den aus dem Verbrennungsluftstrom 2 und dem Teilstrom 4 zusammen gebildeten Gesamtgastrom kühlt und damit die Arbeitstemperatur in den Zylindern 8 absenkt. Gleichzeitig wird die spezifische Gasdichte erhöht. Es kann auch zweckmäßig sein, auf einen Kühler 18 zu verzichten oder einen Kühler 18 allein für den verdichteten Verbrennungsluftstrom 2 und/oder für den Teilstrom 4 des Abgasstromes 6 vorzusehen.

Im erfindungsgemäßen Verfahren zum Betrieb des gezeigten Otto-Motors 1 ist das geometrische Verdichtungsverhältnis, also das Verhältnis vom Volumen in den Zylindern 8 beim unteren Totpunkt zum Volumen beim oberen Totpunkt größer als 10. Der Otto-Motor 1 ist für den Betrieb in einem Nutzfahrzeug vorgesehen. Vorteilhaft ist das Verdichtungsverhältnis gegenüber einen Referenzmotor um einschließlich 1 bis einschließlich 6 Einheiten, bevorzugt um einschließlich 2 bis einschließlich 4 Einheiten erhöht.

Kleinere Otto-Motoren insbesondere in Personenkraftwagen können auch im aufgeladenen Normalbetrieb eine höhere Referenzverdichtung aufweisen. Diese ist für das erfindungsgemäße Betriebsverfahren in entsprechender Weise zu erhöhen. Verdichtungsverhältnisse bis 23 sind möglich.

Die Einlassventile der Zylinder 8 werden wahlweise sehr früh oder sehr spät geschlossen, also deutlich vor oder nach dem jeweils zugeordneten unteren Totpunkt bei einem Kurbelwinkel von 540°. Bevorzugt werden die Einlassventile zeitlich vor dem unteren Totpunkt geschlossen, was auch als "frühes Einlassschließen" bezeichnet wird. Abhängig vom Betriebspunkt des Otto-Motors 1 und insbesondere abhängig von der Lastanforderung wird der Zeitpunkt für das Schließen der Einlassventile variabel eingestellt. Bevorzugte Zeitpunkte für das Schließen der Einlassventile liegen bei einem Kurbelwinkel in einem Bereich von einschließlich 80° bis einschließlich 60° und insbesondere bei etwa 70° vor dem zugeordneten unteren Totpunkt bei einem Kurbelwinkel von 540°. Dies entspricht einem Kurbelwinkel für das Ventilschließen in einem Bereich von einschließlich 460° bis einschließlich 480° und insbesondere bei etwa 470°. Als Maß für den Zustand des geschlossenen Ventils wird ein restlicher Ventilhub von etwa 1 mm angenommen.

Die Abgasrückführung durch Zusammenführung des Teilstromes 4 des Abgasstromes 6 mit dem Verbrennungsluftstrom 2 erfolgt bei Volllast und auch bei Teillast. Eine Abgasrückführung kann auch für den niedrigen Lastbereich zweckmäßig sein. Die Abgasrückführungsrate bei Volllast und auch bei Teillast liegt in einem Bereich von einschließlich 10% bis einschließlich 35% des dem Zylinder 8 zugeführten Gesamtgasstromes. Sie liegt insbesondere in einem Bereich von einschließlich 15% bis einschließlich 24% und beträgt in dem gezeigten Ausführungsbeispiel etwa 18%.

Der Verbrennungsluftstrom 2, der Teilstrom 4 von rückgeführtem Abgas und die eingespritzte Kraftstoffmenge werden derart aufeinander abgestimmt, dass der Otto-Motor bei Volllast und insbesondere auch bei Teillast mit einem Luftverhältnis von etwa 1 oder größer, also stöchiometrisch oder mager betrieben wird. Ein bevorzugter Bereich des Luftverhältnisses reicht von einschließlich etwa 1 bis einschließlich etwa 2. Die obere Grenze ist durch die Grenze der Zündaussetzung bestimmt.

Die Summe der vorgenannten Maßnahmen bewirkt, dass der Otto-Motor 1 dauerhaft im Volllastbereich und oberen Teillastbereich betrieben werden kann, ohne dass sich thermisch-mechanische Überlastungserscheinungen einstellen. Gegenüber herkömmlichen Verfahren ist eine spezifische Kraftstoffeinsparung von mehr als 10% zu beobachten. Im Vergleich zum Dieselmotor ergeben sich deutliche Emissionsvorteile insbesondere im Hinblick auf den Russausstoß. Eine Absenkung der Abgastemperatur durch Anfettung des Kraftstoff/Luftgemisches ist nicht erforderlich. Ergänzend kann eine Abgasnachbehandlung durch einen Katalysator in der Abgasleitung 12 vorgenommen werden. Der nach dem erfindungsgemäßen Verfahren betriebene Otto-Motor 1 ist besonderes für den Einsatz in Nutzfahrzeugen geeignet, kann aber auch in Personenkraftwagen eingesetzt werden.

## Patentansprüche

1. Verfahren zum Betrieb eines Otto-Motors (1) insbesondere in einem Nutzfahrzeug, bei dem mindestens ein Einlassventil des Otto-Motors (1) sehr früh oder sehr spät geschlossen wird, und bei dem ein dem Otto-Motor (1) zugeführter Verbrennungsluftstrom (2) mit einem Lader (3) verdichtet wird,
**dadurch gekennzeichnet, dass**
dem Verbrennungsluftstrom (2) zumindest bei Volllast ein Teilstrom (4) von rückgeführtem Abgas als Abgasrückführung zugeführt wird und der Otto-Motor (1) mit einem geometrischen Verdichtungsverhältnis größer als 10 betrieben wird, welches gegenüber dem aufgeladenen Normalbetrieb um einschließlich 1 bis einschließlich 6 Einheiten, bevorzugt um einschließlich 2 bis einschließlich 4 Einheiten erhöht ist.

2. Verfahren nach Anspruch 1,
**dadurch gekennzeichnet, dass**
die Abgasrückführung auch bei Teillast erfolgt.

3. Verfahren nach Anspruch 1 der 2,
**dadurch gekennzeichnet, dass**
eine Abgasrückführung mit einer Rate im Bereich von einschließlich 10% bis einschließlich 35%, insbesondere von einschließlich 15% bis einschließlich 24% und bevorzugt von etwa 18% vorgenommen wird.

4. Verfahren nach einem der Ansprüche 1 bis 3,
**dadurch gekennzeichnet, dass**
der Otto-Motor (1) zumindest bei Volllast und insbesondere auch bei Teillast mit einem Luftverhältnis von größer gleich etwa 1 betrieben wird.

5. Verfahren nach Anspruch 4,
**dadurch gekennzeichnet, dass**
der Otto-Motor (1) mit einem Luftverhältnis in einem Bereich von einschließlich etwa 1 bis einschließlich etwa 2 betrieben wird.

6. Verfahren nach einem der Ansprüche 1 bis 5,
**dadurch gekennzeichnet, dass**
das mindestens eine Einlassventil zeitlich vor dem unteren Totpunkt geschlossen wird.

7. Verfahren nach Anspruch 6,
**dadurch gekennzeichnet, dass**
das mindestens eine Einlassventil bei einem Kurbelwinkel in einem Bereich von einschließlich 80° bis einschließlich 60° und insbesondere bei etwa 70° vor dem unteren Totpunkt geschlossen wird.

8. Verfahren nach Anspruch 6 oder 7,
**dadurch gekennzeichnet, dass**
abhängig vom Betriebspunkt des Otto-Motors (1) ein Zeitpunkt für das Schließen des mindestens einen Einlassventils variabel eingestellt wird.

9. Verfahren nach einem der Ansprüche 1 bis 8,
**dadurch gekennzeichnet, dass**
eine Kühlung des Verbrennungsluftstromes (2) und/oder des Teilstromes (4) von rückgeführtem Abgas vorgenommen wird.

## Claims

1. Method for operating a spark-ignition engine (1), in particular in a commercial vehicle, wherein at least one intake valve of the spark-ignition engine (1) is closed very early or very late and wherein a combustion air flow (2) supplied to the spark-ignition engine (1) is compressed by a supercharger,
**characterised in that**
a partial flow (4) of recirculated exhaust gas is fed to the combustion air flow (2) at least in the full load mode as exhaust gas recirculation, and **in that** the spark-ignition engine (1) is operated with a geometrical compression ratio greater than 10, which, compared to charged normal operation, is increased by 1 to 6 units inclusive, preferably by 2 to 4 units inclusive.

2. Method according to claim 1,
**characterised in that**
exhaust gas is recirculated in the part-load mode as well.

3. Method according to claim 1 or 2,
**characterised in that**
exhaust gas is recirculated at a rate in the range of 10% to 35% inclusive, in particular 15% to 24% inclusive and preferably approximately 18%.

4. Method according to any of claims 1 to 3,
**characterised in that**
the spark-ignition engine (1) is operated with an air ratio greater than / equal to approximately 1 at least in the full load mode and in particular in the part-load mode as well.

5. Method according to claim 4,
**characterised in that**
the spark-ignition engine (1) is operated with an air ratio in a range of approximately 1 to approximately 2 inclusive.

6. Method according to any of claims 1 to 5,
**characterised in that**
the at least one intake valve is closed before bottom dead centre in terms of time.

7. Method according to claim 6,
**characterised in that**
the at least one intake valve is closed before bottom dead centre at a crank angle in a range of 80° to 60° inclusive and in particular approximately 70°.

8. Method according to claim 6 or 7,
**characterised in that**
a time for closing the at least one intake valve is variably set in dependence on the operating point of the spark-ignition engine (1).

9. Method according to any of claims 1 to 8,
**characterised in that**
the combustion air flow (2) and/or the partial flow (4) of recirculated exhaust gas is/are cooled.

## Revendications

1. Procédé pour faire fonctionner un moteur à allumage par étincelles (1), notamment dans un véhicule utilitaire, au moins une soupape d'admission du moteur à allumage par étincelles (1) est fermée très tôt ou très tard, et un flux d'air comburant (2) acheminé au moteur à allumage par étincelles (1) est comprimé avec un surcompresseur (3), **caractérisé en ce qu'**on achemine au flux d'air comburant (2), au moins en pleine charge, un flux partiel (4) de gaz d'échappement recyclés sous forme de recirculation de gaz d'échappement et on fait fonctionner le moteur à allumage par étincelles (1) à un rapport de compression géométrique supérieur à 10, qui est augmenté de 1 à 6 unités incluses, de préférence de 2 à 4 unités incluses, par rapport au fonctionnement normal suralimenté.

2. Procédé selon la revendication 1, **caractérisé en ce que** le recyclage des gaz d'échappement s'effectue également en cas de charge partielle.

3. Procédé selon la revendication 1 ou 2 **caractérisé en ce qu'**est effectué un recyclage des gaz d'échappement dont le débit se situe dans la plage entre 10 % et 35 % inclus, en particulier entre 15 % et 24 % inclus et qui est de préférence d'environ 18 %.

4. Procédé selon l'une quelconque des revendications 1 à 3, **caractérisé en ce qu'**on fait fonctionner le moteur à allumage par étincelles (1) au moins en pleine charge et en particulier également en charge partielle avec un coefficient d'air qui est supérieur ou égal à environ 1.

5. Procédé selon la revendication 4, **caractérisé en ce qu'**on fait fonctionner le moteur à allumage par étincelles (1) avec un coefficient d'air qui se situe dans une plage d'environ 1 à 2 inclus.

6. Procédé selon l'une quelconque des revendications 1 à 5, **caractérisé en ce qu'**au moins une soupape d'admission se ferme temporairement avant le point mort bas.

7. Procédé selon la revendication 6, **caractérisé en ce qu'**au moins une soupape d'admission se ferme lorsque l'angle de vilebrequin se trouve dans une plage entre 80° et 60° inclus et en particulier à environ 70° avant le point mort bas.

8. Procédé selon la revendication 6 ou 7, **caractérisé en ce qu'**en fonction du point de fonctionnement du moteur à allumage par étincelles (1), le moment de fermeture de l'au moins une valve d'admission est réglé.

9. Procédé selon l'une quelconque des revendications 1 à 8, **caractérisé en ce qu'**un refroidissement du flux d'air comburant (2) et / ou du flux partiel (4) des gaz d'échappement recyclés est effectué.
